# EUROPEAN PATENT SPECIFICATION

(11) **EP 2 725 837 B1**
(45) Date of publication and mention of the grant of the patent: **01.06.2016**
(21) Application number: 11868245.9
(22) Date of filing: 24.10.2011
(51) Int. Cl.: H04W 16/14, H04W 36/00, H04W 52/34, H04L 27/26, H04W 52/14, H04L 5/00, H04W 52/28, H04W 52/32, H04W 52/16

(54) **METHOD AND APPARATUS FOR CONFIGURING CELL-SPECIFIC REFERENCE SIGNAL**
VERFAHREN UND VORRICHTUNG ZUM KONFIGURIEREN EINES ZELLENSPEZIFISCHEN REFERENZSIGNALS
PROCÉDÉ ET APPAREIL DE CONFIGURATION D'UN SIGNAL DE RÉFÉRENCE SPÉCIFIQUE À UNE CELLULE

(30) Priority: 21.06.2011 CN 201110167316
(43) Date of publication of application: 30.04.2014
(73) Proprietor: ZTE Corporation, Shenzhen City, Guangdong Province 518057 (CN)
(72) Inventor: LIU, Xuebin, Shenzhen Guangdong 518057 (CN); LI, Lian, Shenzhen Guangdong 518057 (CN); DONG, Hui, Shenzhen Guangdong 518057 (CN)
(74) Representative: Bittner, Bernhard
(86) International application number: PCT/CN2011/081202
(87) International publication number: WO 2012/174813

(56) References cited:
- CN-A- 101 801 091
- CN-A- 101 888 690
- CN-A- 101 888 692

## Description

### TECHNICAL FIELD

The disclosure relates to the field of mobile communications, and in particular to a method and an apparatus for configuring a Cell-Specific Reference Signal (CRS).

### BACKGROUND

In a fourth-generation mobile communication Long Term Evolution (LTE) system, a Reference Signal (RS) is a pilot signal known to a receiving end, facilitating the receiving end to implement channel estimation and relevant measurement. The RS plays a very import role in demodulation of receiving signals, elimination of interference, improvement of a Signal Interference Noise Ratio (SINR), cell reselection and handover of a User Equipment (UE, also referred to as terminal) and the like.

There are many types of RSs in LTE. A CRS transmitted to a UE from an Evolved NodeB (eNB) of LTE is a common RS, which is continuously broadcasted in a cell to facilitate all UEs in the cell to estimate and measure quality of a downlink channel of the cell.

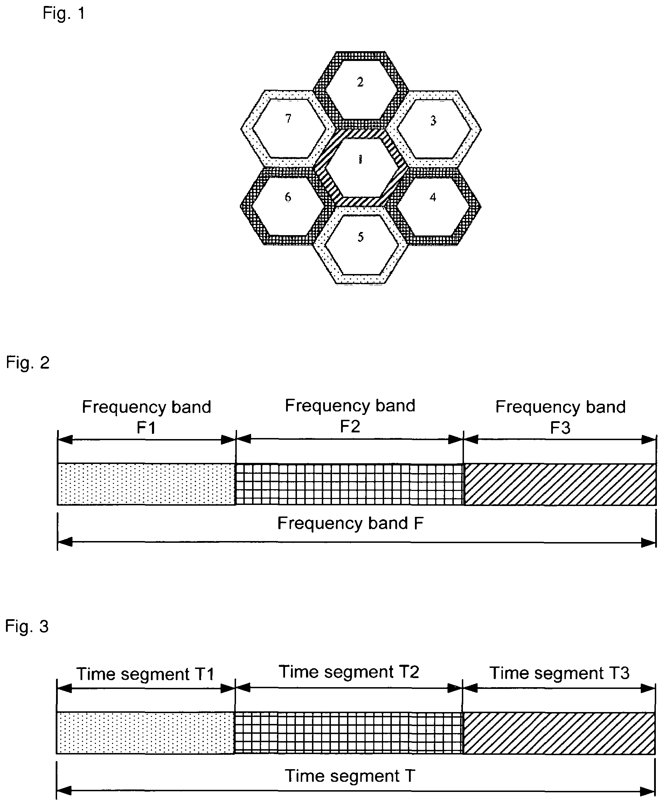

Compared with in third-generation mobile communications, a single cell can obtain a higher spectrum efficiency in LTE. However, in a co-channel network consisting of multiple cells contiguously, inter-cell interference is very serious, which significantly reduces the spectrum efficiency. Therefore, LTE put forwards Inter Cell Interference Coordination (ICIC) technology, as shown in Fig. 1. A cell is divided into a cell central area and a marginal area (a white area represents a central area, and an area with a textured pattern represents a marginal area; in some ICIC schemes, a cell is also divided into three areas, i.e., an inner circle, a middle circle and an outer circle). Fig. 1 shows 7 cells (i.e., cell 1 to cell 7), in which cell 1 and each of the other 6 cells (i.e., cell 2 to cell 7) are adjacent to each other. A UE in the central area of a cell can use total transmission resources, while a UE in the marginal area (i.e., a switching area connecting a neighbour cell) of the cell can only use a part of transmission resources. Moreover, resources used by UEs in marginal areas of adjacent cells are different, that is, the resources are orthogonal to each other.

Transmission resources might be frequency-domain resources, for example, frequency bands. Fig. 2 shows ICIC based on frequency domain, in which the entire frequency band F can be used in the central area of a cell while only a part of the entire frequency band (for example, F1, F2, or F3) can be used in the marginal area of the cell. Moreover, frequency band used in marginal areas of adjacent cells are different. Transmission resources may also be time-domain resources, for example, time segments. Fig. 3 shows ICIC based on time domain, in which the entire time segment T can be used in the central area of a cell while only a part of the entire time segment (for example, T1, T2, or T3) can be used in the marginal area of the cell. Moreover, time segments used in marginal areas of adjacent cells are different.

During specific implementation of ICIC in LTE, a specific power is generally set for a "dedicated channel" of a UE according to an area in which the UE is located. For example, in the ICIC based on frequency domain, a specific power is set for a Physical Downlink Shared Channel (PDSCH) allocated to a UE to bear UE dedicated data in a specific frequency band; in the ICIC based on time domain, specific powers are set for a Physical Downlink Control Channel (PDCCH) and a PDSCH allocated to a UE to bear UE dedicated scheduling information and UE dedicated data in a specific time segment respectively. The specific setting is mainly to improve the power of marginal transmission resources and reduce the power of central transmission resources. However, no specific power is set for a common channel or common signal of all UEs in a cell, such as a Physical Broadcasting Channel (PBCH), a Physical Control Format Indicator Channel (PCFICH), a Physical Hybrid ARQ Indicator Channel (PHICH), a common PDCCH bearing scheduling information on a Broadcasting Channel (BCH) and a Paging Channel (PCH), a common PDSCH bearing data on a BCH and a PCH, and a CRS), that is, a reference power is adopted. The Energy per Resource Element (EPRE) of the CRS is generally a cell-level fixed value configured by a background network manager through network planning and network optimization, that is, the transmitting power of each Resource Element (RE) of the CRS is fixed and same by default.

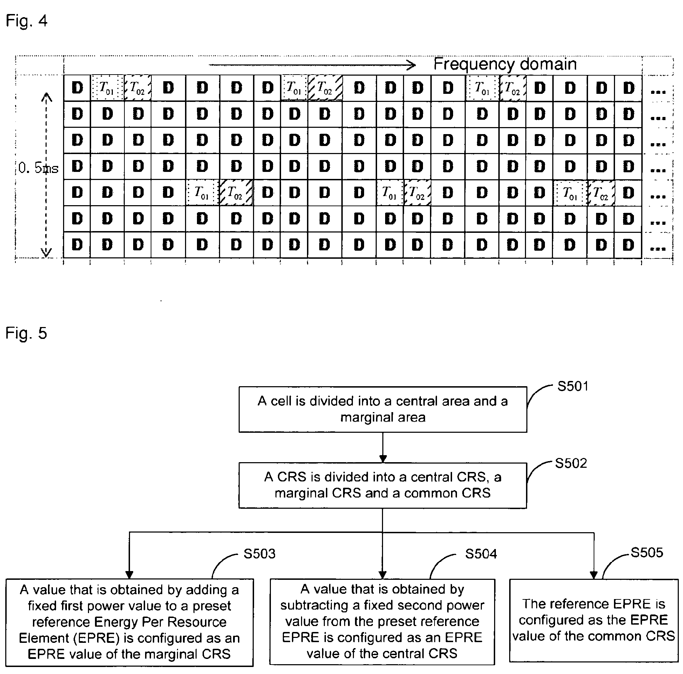

However, the CRS would produce co-channel interference on other channels in a neighbour cell and which are on the same symbol with the CRS, such as a PDCCH and a PDSCH, this is because the CRS of a cell is generally staggered from that of a neighbour cell in frequency domain and no interference is generated between the CRSs. As shown in Fig. 4, each small square represents one RE, square *T*₀₁, represents the RE of the CRS of cell 1, square *T*₀₂ represents the RE of the CRS of cell 2, square D represents the RE of data, cell 1 and cell 2 are adjacent to each other, and the RE frequency domain position of the CRS of cell 1 is staggered from that of the CRS of cell 2. However, such configuration causes the CRS to conflict in frequency domain with a PDCCH, a PCFICH, a PHICH, a PDSCH or the like in a neighbour cell which is in the same symbol with the CRS, thereby producing co-channel interference. Since the CRS is continuously transmitted in time domain, frequency domain and spatial domain, interference impact does not allow to be ignored; particularly for a UE in the marginal area of a cell, interference is significant. According to theoretical analysis, system simulation and actual tests, even if in the condition of only one neighbour cell of no load, downlink throughput of a PDSCH for a UE in the marginal area of a cell would be reduced by half due to the interference of a CRS of a neighbour cell, and during inter-cell handover, the throughput is reduced more.

A document CN 101801091 discloses a method and a device for scheduling resources in an OFDM/MIMO system. In the method and the device, cell users are divided into cell edge users or cell center users and the resources are allocated to the cell edge users and the cell center users. The method comprises the following steps of: dividing time-frequency resources into a first resource group and a second resource group and dividing the first resource group and the second resource group into a plurality of resource blocks; configuring master resources and auxiliary resources in the first resource group for the cells and configuring the master resources and the auxiliary resources in the second resource group for the cells according to the plurality of resource blocks; and allocating the master resources in the first resource group and the second resource group to the cell edge users and allocating the auxiliary resources in the first resource group and the second resource group to the cell center users.

### SUMMARY

Embodiments of the disclosure provide a method and an apparatus for configuring a CRS, so as to solve the problem that an existing CRS produces co-channel interference on a dedicated channel and a common channel in a neighbour cell that are on the same symbol as the CRS.

A method for configuring a CRS provided by an embodiment of the disclosure includes:
a cell is divided into a central area and a marginal area;
the CRS is divided into a central CRS, a marginal CRS and a common CRS,
wherein the central CRS is a CRS located on the transmission resource section used by the central area of the cell and is on the same symbol as the dedicated channel of the central area; the marginal CRS is a CRS located on the transmission resource section used by the marginal area of the cell and is on the same symbol as the dedicated channel of the marginal area; and the common CRS is a CRS other than the central CRS and the marginal CRS, which is adjacent to and is on the same symbol as the frequency domain of the downlink common channel;
a value that is obtained by adding a fixed first power value to a preset reference Energy Per Resource Element (EPRE) is configured as an EPRE value of the marginal CRS;
a value that is obtained by subtracting a fixed second power value from the preset reference EPRE is configured as an EPRE value of the central CRS; and
the preset reference EPRE is configured as the EPRE value of the common CRS.

An apparatus for configuring a CRS provided by an embodiment of the disclosure includes:
a cell division unit, configured to divide a cell into a central area and a marginal area;
a CRS division unit, configured to divide the CRS into a central CRS, a marginal CRS and a common CRS, wherein the central CRS is a CRS which is located on a transmission resource section used in the central area of the cell and is on a same symbol as a dedicated channel of the central area; the marginal CRS is a CRS which is located on a transmission resource section used in the marginal area of the cell and is on a same symbol as a dedicated channel of the marginal area; and the common CRS is a CRS other than the central CRS and the marginal CRS, which is adjacent to a downlink common channel in frequency domain and is on the same symbol as the downlink common channel; and
a configuration unit, configured to: configure a value that is obtained by adding a fixed first power value to a preset reference Energy Per Resource Element (EPRE), as an EPRE value of the marginal CRS; configure a value that is obtained by subtracting a fixed second power value from the preset reference EPRE, as an EPRE value of the central CRS; and configure the preset reference EPRE as an EPRE value of the common CRS.

The embodiments of the disclosure have advantages as follows:
with the method and the apparatus for configuring a CRS provided by the embodiments of the disclosure, the CRS is divided into a central CRS, a marginal CRS and a common CRS on the basis of dividing a cell into a central area and a marginal area in the existing ICIC technology, wherein the EPRE of the central CRS is reduced by certain power on the basis of a preset reference EPRE, and the EPRE of the marginal CRS is raised by certain power on the basis of the preset reference EPRE. Therefore, without affecting the downlink performance of a UE in the central area of a cell, an SINR of a marginal area of the cell can be improved and the downlink performance of a UE in the marginal area of the cell can be enhanced.

Since the power of the CRS is adjusted on the basis of a reference, this adjustment can be considered as transparent adjustment for the UE. Therefore, no impact is caused to the UE in measuring a downlink Channel Quality Indicator (CQI) under a full bandwidth, no impact is caused to cell reselection and handover of the UE, and a small impact is caused to an existing network, which facilitates implementation of the disclosure in the existing network.

### BRIEF DESCRIPTION OF THE DRAWINGS

Fig. 1 shows a diagram of dividing each cell into a central area and a marginal area in existing ICIC technology;
Fig. 2 shows a diagram of frequency domain division in the frequency-domain based ICIC in the related art;
Fig. 3 shows a diagram of time domain division in the time-domain based ICIC in the related art;
Fig. 4 shows a diagram of CRS-REs of adjacent cells staggered in frequency domain positions in the related art;
Fig. 5 shows a flowchart of a method for configuring a CRS provided by an embodiment of the disclosure;
Fig. 6 shows a diagram of a CRS provided by an embodiment of the disclosure;
Fig. 7 shows a structure diagram of an apparatus for configuring a CRS provided by an embodiment of the disclosure;
Fig. 8 shows a first diagram of the structure of a configuration unit provided by an embodiment of the disclosure; and
Fig. 9 shows a second diagram of the structure of a configuration unit provided by an embodiment of the disclosure.

### DETAILED DESCRIPTION

Specific implementation of the method and the apparatus for configuring a CRS provided by the embodiments of the disclosure are elaborated below with reference to the drawings.

A method for configuring a CRS provided by an embodiment of the disclosure is elaborated first.

The method for configuring a CRS provided by an embodiment of the disclosure includes: the power of the CRS is adjusted on the basis of dividing a cell into a central area and a marginal area in the existing ICIC technology and adjusting the power of dedicated channels (a PDSCH bearing UE dedicated data and a PDCCH bearing UE dedicated scheduling information) of a marginal area and a central area of a cell. The method, as shown in Fig. 5, includes:
S501: A cell is divided into a central area and a marginal area.
S502: A CRS is divided into a central CRS, a marginal CRS and a common CRS.

In S501, on the basis of dividing the cell into the central area and the marginal area, the central CRS is a CRS which is located on a transmission resource section used in the central area of the cell and which is on the same symbol as a dedicated channel of the central area;
the marginal CRS is a CRS which is located on a transmission resource section used in the marginal area of the cell and which is on the same symbol as the dedicated channel of the marginal area; and
the common CRS is a CRS, except for the central CRS and the marginal CRS, which is adjacent to a downlink common channel in frequency domain and which is on the same symbol as the downlink common channel.

The dedicated channels include but are not limited to: a PDSCH bearing UE dedicated data (hereinafter referred to as "dedicated PDSCH" in brief) and a PDCCH bearing UE dedicated scheduling information (hereinafter referred to as "dedicated PDCCH" in brief).

The common channel includes but is not limited to: a PBCH, a PCFICH, a PHICH, a PDCCH bearing scheduling information of a BCH and a PCH (hereinafter referred to as "common PDCCH" in brief), and a PDSCH bearing data of a BCH and a PCH (hereinafter referred to as "common PDSCH" in brief).

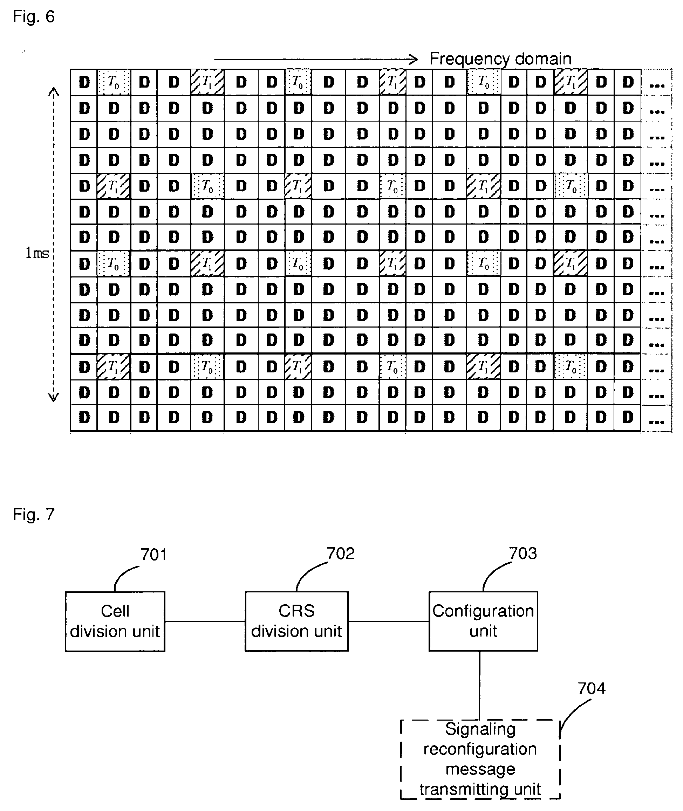

Take a CRS in the mode of two antenna ports shown in Fig. 6 for an example, the vertical axis represents a time shaft, and the horizontal axis represents a frequency domain shaft. The small squares with patterns indicates CRSs. That the CRS is on a same symbol as the dedicated channel or common channel refers to that the CRS has the same position as the dedicated channel on the time shaft.

S503: A value that is obtained by adding a fixed first power value to a preset reference Energy Per Resource Element (EPRE) is configured as an EPRE value of the marginal CRS.

S504: A value that is obtained by subtracting a fixed second power value from the preset reference EPRE is configured as an EPRE value of the central CRS.

S505: The reference EPRE is configured as the EPRE value of the common CRS.

In S503 and S504, the values of the first power and the second power can be directly set to the adjusted power value of an EPRE of the dedicated channel in the existing ICIC technology, or can also be adjusted on the basis of the adjusted power value of the EPRE of the dedicated channel in the existing ICIC technology in conjunction with system simulation and network testing. Specifically, two conditions are included as follows.

### Condition 1:

In the condition that transmission resources are based on frequency domain, only the EPREs of the dedicated PDSCHs of the marginal area and central area of the cell are adjusted on the basis of a reference power in the existing ICIC technology while the EPRE of the dedicated PDCCH is directly set as the reference power without adjusting the EPRE of the dedicated PDCCH. Therefore, the adjusted power values of the EPREs of the central CRS and the marginal CRS can refer to the adjusted power value of the EPRE of the dedicated PDSCH.

First, a first difference (N1) between the EPRE of the dedicated PDSCH of the marginal area of the cell and the reference EPRE that are set according to the existing ICIC technology is determined, and a second difference (N2) between the EPRE of the dedicated PDSCH of the central area of the cell and the reference EPRE that are set according to the existing ICIC technology is determined.

Assume that the first power value by which the EPRE of the marginal CRS needs to be raised is M1 and that the second power value by which the EPRE of the central CRS needs to be reduced is M2.
Mode 1: M1 is set directly to N1 and M2 is set directly to N2. That is, a fixed power difference is kept between the adjusted marginal CRS and the dedicated PDSCH of the marginal area of the cell. In this way, since in existing ICIC technology the adjusted value of the dedicated channel can already achieve the purpose of reducing interference on a neighbour cell and not impacting the performance of the dedicated channel of the central area of the cell, the direct use of the adjusted value on one hand can achieve a similar technical effect and on the other hand can avoid transmitting a new power difference between the CRS and the PDSCH to a UE in the cell, thereby saving some signalling overhead.
Mode 2: according to a result of system simulation and network testing, adjustment is made on the basis of N1 to obtain M1, and adjustment is made on the basis of N2 to obtain M2.

If the adjustment amount of the marginal CRS (or the central CRS) is inconsistent with that of the dedicated PDSCH of the marginal area of the cell (or the dedicated PDSCH of the central area of the cell) which is on the same symbol as the marginal CRS, the power difference between the adjusted CRS and the dedicated PDSCH would be changed. At this moment, it is also needed to inform, through a signalling reconfiguration message, the UE in the cell of the new EPRE power difference between the dedicated PDSCH of the marginal area of the cell and the marginal CRS and the new EPRE power difference between the dedicated PDSCH of the central area of the cell and the central CRS.

No matter Mode 1 or Mode 2 is adopted, the values of N1, M1, N2 and M2 must satisfy that: the sum of respective configured powers of the dedicated PDSCH of the central area of the cell and the central CRS, the dedicated PDSCH of the marginal area of the cell and the marginal CRS, the common CRS and the common channel of the cell is, on the same symbol, not greater than the maximum power of the cell.

### Condition 2:

In the condition that transmission resources are based on time domain, the EPREs of the dedicated PDSCH and the dedicated PDCCH of the central area or marginal area of the cell are adjusted on the basis of a reference power in the existing ICIC technology, respectively. Therefore, in this condition, the adjusted power values of EPRE of the central CRS and the marginal CRS which are on the same symbol as the dedicated PDSCH can refer to the adjusted power value of EPRE of the dedicated PDSCH of the central area and the marginal area of the cell respectively. And, the adjusted power values of the EPREs of the central CRS and the marginal CRS which are on the same symbol as the dedicated PDCCH can refer to the adjusted power values of the EPREs of the dedicated PDCCHs of the central area and the marginal area of the cell respectively.

Specifically, a first difference (N1) between the EPRE of the dedicated PDSCH of the marginal area of the cell and the reference EPRE that are set according to the existing ICIC technology is determined, a second difference (N2) between the EPRE of the dedicated PDSCH of the central area of the cell and the reference EPRE that are set according to the existing ICIC technology is determined, a third difference (N3) between the EPRE of the dedicated PDCCH of the marginal area of the cell and the reference EPRE that are set according to the existing ICIC technology is determined, and a fourth difference (N4) between the EPRE of the dedicated PDCCH of the central area of the cell and the reference EPRE that are set according to the existing ICIC technology is determined.

Similar to Condition 1, the first power value of the EPRE of the marginal CRS which is on the same symbol as the dedicated PDSCH of the marginal area of the cell (i.e., the power value needed to be adjusted relative to the reference power value, M1), the second power value (M2) of the EPRE of the central CRS which is on the same symbol as the dedicated PDSCH of the central area of the cell, the first power value (M3) of the EPRE of the marginal CRS which is on the same symbol as the dedicated PDCCH of the marginal area of the cell, and the second power value (M4) of the EPRE of central CRS which is on the same symbol as the dedicated PDCCH of the central area of the cell can also be configured through the following two modes.
Mode 1: M1 is set directly to N1, M2 is set directly to N2, M3 is set directly to N3, and M4 is set directly to N4. That is, a fixed power difference is kept between the adjusted marginal CRS and the dedicated PDSCH or dedicated PDCCH of the marginal area of the cell which is on the same symbol as the marginal CRS, and a fixed power difference is kept between the adjusted central CRS and the dedicated PDSCH or dedicated PDCCH of the central area of the cell which is on the same symbol as the central CRS. In this way, on one hand, interference of the central CRS on a neighbour cell can be reduced without impacting the performance of the central CRS of the cell; on the other hand, it is not necessary to inform the UE of the power difference, thereby saving some signal overhead.
Mode 2: according to a result of system simulation and network testing, adjustment is made on the basis of N1 to obtain M1, and adjustment is made on the basis of N2 to obtain M2, adjustment is made on the basis of N3 to obtain M3, and adjustment is made on the basis of N4 to obtain M4.

Similar to Condition 1, in Mode 2, since the power difference between the CRS and the PDSCH which is on the same symbol as the CRS is changed compared with that before configuration, it is also needed to inform, through a signalling reconfiguration message, the UE in the cell of a power difference between the configured EPRE of the dedicated PDSCH of the marginal area of the cell and the configured EPRE of the marginal CRS which is on the same symbol as the dedicated PDSCH and a power difference between the configured EPRE of the dedicated PDSCH of the central area of the cell and the configured EPRE of the central CRS which is on the same symbol as the dedicated PDSCH.

No matter Mode 1 or Mode 2 is adopted, the values of N1, M1, N2, M2, N3, M3, N4 and M4 must satisfy that: the sum of respective configured powers of the dedicated PDSCH of the central area of the cell and the central CRS which is on the same symbol as the dedicated PDSCH, the dedicated PDSCH of the marginal area of the cell and the marginal CRS which is on the same symbol as the dedicated DPSCH, the dedicated PDCCH of the central area of the cell and the central CRS which is on the same symbol as the dedicated PDCCH, the dedicated PDCCH of the marginal area of the cell and the marginal CRS which is on the same symbol as the dedicated DPCCH, the common CRS and the common channel of the cell is, on the same symbol, not greater than the maximum power of the cell.

In order to better illustrate the method for configuring a CRS provided by the embodiment of the disclosure, examples of transmission resources based on frequency domain and time domain are provided below respectively.

### Example 1

In Example 1, transmission resources are divided based one frequency domain.

A specific configuration process is as follows.

It is assumed that the frequency bandwidth of an LTE cell is 20MHz, in which there are 100 available Resource Blocks (RBs), i.e., 1200 REs, Cyclic Prefix (CP) adopts a normal CP, the base station has 2 antennas, and the maximum transmitting power is 40W, i.e., 46dBm.

Before implementing ICIC, it is assumed that the reference power EPRE of the CRS EPRE (CRS-RE) is 12dBm, and the difference value of the power of PDSCH-RE relative to the reference power of CRS-RE is set to 0dB, i.e., the power of PDSCH-RE is set to 12dBm. Therefore, the total power of the PDSCH and the CRS which is on the same symbol as the PDSCH is: 12+10*Log1200=42.79dBm, which is less than the maximum power (46dBm) of the cell. Thus, power overload would not occur.

During implementing ICIC, a cell is divided into a central area and a marginal area, wherein the marginal area is allocated with frequency band resources of 30 RBs, the central area is allocated with frequency band resources of 60 RBs (if not occupied, the frequency band resources of the marginal area can be temporarily turned into frequency band resources of the central area to be used), and the rest 10 RBs are reserved for the downlink common channel and the common CRS, wherein the 10 RBs are located between the frequency band of the marginal area and the frequency band of the central area. Since division of central area and marginal area is made only for the dedicated PDSCH in the ICIC based on frequency domain, only the CRS which is on the same symbol as the PDSCH is divided. Therefore, it can be obtained that the marginal CRS has 30*4=120 REs, the marginal PDSCH has 30*8=240 REs, the central CRS has 60*4=240 Res, and the central PDSCH has 60*8=480 REs.

Both the power of the PDSCH-RE in the 30-RB frequency band of the marginal area and the power of the CRS-RE which is on the same symbol as the PDSCH-RE are raised by 3dB on the basis of the original reference power, i.e., becoming 15dBm.

Both the power of the PDSCH-RE in the 60-RB frequency band of the central area and the power of the CRS-RE which is on the same symbol as the PDSCH-RE are reduced by 3dB on the basis of the original reference power, i.e., becoming 9dBm.

Both the power of the common PDSCH and the power of the common CRS in the rest 10-RB frequency band are not adjusted, and are still kept at 12dBm.

The total power of the adjusted PDSCH and the adjusted CRS which is on the same symbol as the PDSCH is: 10*Log(10.^(15/10)*120 + 10.^(15/10)*240 + 10.^(9/10)*240 + 10.^(9/10)*480 + 10.^(12/10)*120)=42.79dBm, which is still less than the maximum power (46dBm), thus power overload would not occur.

### Example 2

In Example 2, transmission resources are divided based on time domain.

A specific configuration process is as follows.

It is assumed that the frequency bandwidth of an LTE cell is 20MHz, in which there are 100 available Resource Blocks (RBs), i.e., 1200 REs, Cyclic Prefix (CP) adopts a normal CP, the base station has 2 antennas, and the maximum transmitting power is 40W, i.e., 46dBm.

If in LTE of Frequency Division Duplex (FDD) mode, one downlink radio frame contains 10 downlink radio Sub Frames (SFs): SFO-SF9; if in LTE of Time Division Duplex (TDD) mode, it is assumed that uplink and downlink configurations are 1, one radio frame contains 6 downlink SFs (SF0, SF1, SF4, SF5, SF6, SF9) and 4 uplink SFs (SF2, SF3, SF7, SF8). Hereinafter, the disclosure is described below by taking FDD as an example (SFs are fewer in the TDD mode; it is more complex to implement the ICIC based on time domain, but the principle is similar, which is not further repeated here).

Before implementing ICIC, it is assumed that the reference power EPRE of CRS-RE is 12dBm, the difference values of the power of PDCCH-RE, PBCH-RE, PCHICH-RE, PHICH-RE and PDSCH-RE relative to the reference power of CRS-RE are set to 0dB respectively, that is, the powers of PDCCH-RE, PBCH-RE, PCHICH-RE, PHICH-RE and PDSCH-RE are set to12dBm respectively. Therefore, no matter for the symbol on which the PDCCH is located or for the symbol on which the PDSCH is located, the total power is: 12+10*Log1200=42.79dBm, which is less than the maximum power (46dBm) of the cell, thus power overload would not occur.

During implementing ICIC, a cell is divided into a central area and a marginal area, wherein the marginal area is allocated with time segment resources of 3 SFs, the central area is allocated with time segment resources of 6 SFs (if not occupied, the time segment resources of the marginal area can be temporarily turned into time segment resources of the central area to be used), and the rest 1-SF time segment resources are reserved for the common channel and the common CRS. Due to the characteristic of scheduling process, the marginal area time segment resources of the PDCCH differ by 4 SFs from that of the PDSCH, and the central area time segment resources of the PDCCH also differ by 4 SFs from that of the PDSCH. For example, if the PDCCH downlink time segments allocated to the marginal area are "SF1 & SF2 & SF3", then PDSCH downlink time segments are "SF5 & SF6 & SF7"; if the PDCCH downlink time segments allocated to the central area are "SF4 & SF5 & SF6 & SF7 & SF8 & SF9", then PDSCH downlink time segments are "SF8 & SF9 & SF0 & SF1 & SF2 &SF3"; and SF0 is allocated to the downlink common PDCCH, and SF4 is allocated to the downlink common PDSCH.

The power of the dedicated PDCCH in the central area SFs of PDCCH and the power of the central CRS which is on the same symbol as the dedicated PDCCH, and the power of the dedicated PDSCH in the central area SFs of PDSCH and the power of the central CRS which is on the same symbol as the dedicated PDSCH all are reduced by 3dB or more on the basis of the reference power, while the power of the common channel (such as, the PBCH, the PCFICH, the PHICH, the common PDCCH, or the common PDSCH) and the power of the common CRS which is adjacent to the common channel in frequency domain and is on the same symbol as the common channel keep unchanged. Since power is reduced, it is impossible to appear power overload.

The power of the dedicated PDCCH in the marginal area SFs of PDCCH and the power of the marginal CRS which is on the same symbol as the dedicated PDCCH, and the power of the dedicated PDSCH in the marginal area SF of PDSCH and the power of the marginal CRS is on the same symbol as the dedicated PDSCH all are raised by 3dB on the basis of the reference power, while the power of the common channel (such as, the PBCH, the PCFICH, the PHICH, the common PDCCH, or the common PDSCH) and the power of the common CRS which is adjacent to the common channel in frequency domain and is on the same symbol as the common channel keep unchanged or are raised by 3dB, then, the maximum total power on the symbol on which the CRS is located is: 42.79+3=45.79dBm, which is still less than the maximum power (46dBm), thus power overload would not occur.

For the common downlink PDCCH and the common downlink PDSCH in SF0 and SF4, and the common CRS which is on the same symbol as the PDCCH and the PDSCH and is adjacent to the PDCCH and the PDSCH in frequency domain, their powers are not adjusted and are still 12dBm respectively, thus power overload would not occur.

From another perspective, the method for configuring a CRS provided by the embodiment of the disclosure enables the marginal CRS to borrow the power of the central CRS, in this way, power sharing is realized, and the difference in coverage between the central area and the marginal area is reduced. Thus, the coverage of the cell is more even, the fairness of cell coverage is improved and the utilization efficiency of power is improved. In addition, since the power of the marginal CRS of the cell is enhanced, co-channel interference on the marginal CRS of the cell from a channel, which is on the same symbol as the marginal CRS in a neighbour cell is reduced. Thus, the downlink performance of the UE in the marginal area of the cell is significantly improved under the premise of not impacting the function of the CRS.

Since only the power of the CRS is adjusted, it is equivalent that amplitude weighting is performed on the CRS, which is similar to construct a virtual radio transmission channel having a special amplitude-frequency response characteristic (the amplitude-frequency response of the central transmission resource section is low, and the amplitude-frequency response of the marginal transmission resource section is high) before a real radio transmission channel. For a UE, the adjustment can be considered as transparent. If all cells in a network adopt this method, no impact would be caused to the UE in the measurement of downlink CQI under full bandwidth, and no impact would be caused to cell reselection and handover of the UE. Moreover, since the UE supports the measurement of sub-band CQI of part bandwidths, no problem would be caused to the demodulation of downlink signal performed by UE based on CRS channel estimation. In addition, since an eNB knows the power adjustment of the CRS in the cell, impact can be eliminated through a compensation algorithm, so as to restore the real condition of a radio transmission channel. The method for configuring a CRS provided by the embodiment of the disclosure has little impact on the existing network, which can be neglected basically, thus facilitating implementation of the method in the existing network.

Based on the same idea of the disclosure, an embodiment of the disclosure also provides an apparatus for configuring a CRS. Since the principle of the apparatus for configuring a CRS in solving a problem is similar to the method for configuring a CRS, the implementation of the apparatus can refer to the implementation of the above method, which is not repeated.

An apparatus for configuring a CRS provided by an embodiment of the disclosure, as shown in Fig. 7, includes:
a cell division unit 701, configured to divide a cell into a central area and a marginal area;
a CRS division unit 702, configured to divide the CRS into a central CRS, a marginal CRS and a common CRS, wherein the central CRS is a CRS which is located on a transmission resource section used in the central area of the cell and is on a same symbol as a dedicated channel of the central area; the marginal CRS is a CRS which is located on a transmission resource section used in the marginal area of the cell and is on a same symbol as a dedicated channel of the marginal area; and the common CRS is a CRS, except for the central CRS and the marginal CRS, which is adjacent to a downlink common channel in frequency domain and is on the same symbol as the downlink common channel; and
a configuration unit 703, configured to: configure a value that is obtained by adding a fixed first power value to a preset EPRE, as an EPRE value of the marginal CRS; configure a value that is obtained by subtracting a fixed second power value from the preset reference EPRE, as an EPRE value of the central CRS; and configure the reference EPRE as an EPRE value of the common CRS.

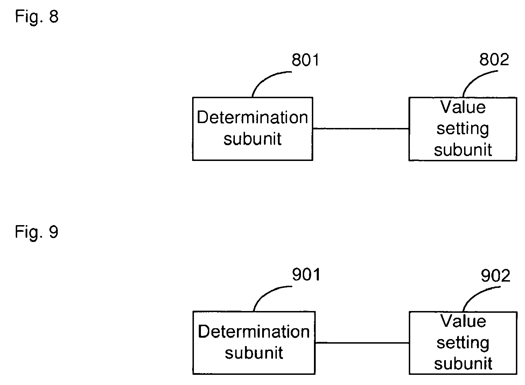

In the condition that the transmission resources are divided based on frequency domain, the configuration unit 703, as shown in Fig. 8, further includes: a determination subunit 801 and a value setting subunit 802.

### Mode 1:

The determination subunit 801 is configured to determine a first difference between an EPRE of a preset dedicated PDSCH of the marginal area of the cell and the reference EPRE, and determine a second difference between an EPRE of a preset dedicated PDSCH of the central area of the cell and the reference EPRE.

The value setting subunit 802 is configured to set the first difference as the first power value and set the second difference as the second power value.

### Mode 2:

The determination subunit 801 is configured to determine a first difference between an EPRE of a preset dedicated PDSCH of the marginal area of the cell and the reference EPRE, and determine a second difference between an EPRE of a preset dedicated PDSCH of the central area of the cell and the reference EPRE.

The value setting subunit 802 is configured to, according to a result of system simulation and network testing, adjust the first difference to obtain the first power value and adjust the second difference to obtain the second power value.

In Mode 2, the apparatus for configuring a CRS provided by the embodiment of the disclosure, as shown in Fig. 7, further includes: a signalling reconfiguration message transmitting unit 704, configured to inform, through a signalling reconfiguration message, a UE in the cell of a power difference between the configured EPRE of the dedicated PDSCH of the marginal area of the cell and the configured EPRE of the marginal CRS which is on the same symbol as the dedicated PDSCH and a power difference between the configured EPRE of the dedicated PDSCH of the central area of the cell and the configured EPRE of the central CRS which is on the same symbol as the dedicated PDSCH.

In this condition, no matter Mode 1 or Mode 2 is adopted, the first difference, the first power value, the second difference and the second power value must satisfy that: the sum of powers of the configured dedicated PDSCH of the central area of the cell and the configured central CRS, the configured dedicated PDSCH of the marginal area of the cell and the configured marginal CRS, the configured common CRS and the configured common channel of the cell is, on a same symbol, not greater than the maximum power of the cell.

In the condition that the transmission resources are divided based on time domain, the configuration unit 703, as shown in Fig. 9, further includes: a determination subunit 901 and a value setting subunit 902.

### Mode 1:

The determination sub-unit 901 is configured to: determine a first difference between an EPRE of a preset dedicated PDSCH of the marginal area of the cell and the reference EPRE; determine a second difference between an EPRE of a preset dedicated PDSCH of the central area of the cell and the reference EPRE; determine a third difference between an EPRE of a preset dedicated PDCCH of the marginal area of the cell and the reference EPRE; and determine a fourth difference between an EPRE of a preset dedicated PDCCH of the central area of the cell and the reference EPRE.

The value setting subunit 902 is configured to: set the first difference as a first power value of a marginal CRS which is on the same symbol as the dedicated PDSCH; set the second difference as a second power value of a central CRS which is on the same symbol as the dedicated PDSCH; set the third difference as a first power value of a marginal CRS which is on the same symbol as the dedicated PDCCH; and set the fourth difference as a second power value of a central CRS which is on the same symbol as the dedicated PDCCH.

### Mode 2:

The determination sub-unit 901 is configured to: determine a first difference between an EPRE of a preset dedicated PDSCH of the marginal area of the cell and the reference EPRE; determine a second difference between an EPRE of a preset dedicated PDSCH of the central area of the cell and the reference EPRE; determine a third difference between an EPRE of a preset dedicated PDCCH of the marginal area of the cell and the reference EPRE; and determine a fourth difference between an EPRE of a preset dedicated PDCCH of the central area of the cell and the reference EPRE.

The value setting subunit 902 is configured to: according to a result of system simulation and network testing, adjust the first difference, the second difference, the third difference and the fourth difference respectively to obtain the first power value of the marginal CRS which is on the same symbol as the dedicated PDSCH, the second power value of the central CRS which is on the same symbol as the dedicated PDSCH, the first power value of the marginal CRS which is on the same symbol as the dedicated PDCCH and the second power value of the central CRS which is on the same symbol as the dedicated PDCCH.

In Mode 2, similar to Mode 1, the configuration apparatus for configuring a CRS provided by the embodiment of the disclosure, as shown in Fig. 7, further includes: a signalling reconfiguration message transmitting unit 704, configured to inform, through a signalling reconfiguration message, a User Equipment (UE) in the cell of a power difference between the configured EPRE of the dedicated PDSCH of the marginal area of the cell and the configured EPRE of the marginal CRS which is on the same symbol as the dedicated PDSCH and a power difference between the configured EPRE of the dedicated PDSCH of the central area of the cell and the configured EPRE of the central CRS which is on the same symbol as the dedicated PDSCH.

In this condition, no matter Mode 1 or Mode 2 is adopted, the first difference, the first power value of the marginal CRS which is on the same symbol as the dedicated PDSCH, the second difference, the second power value of the central CRS which is on the same symbol as the dedicated PDSCH, the third difference, the first power value of the marginal CRS which is on the same symbol as the dedicated PDCCH, the fourth difference, and the second power value of the central CRS which is on the same symbol as the dedicated PDCCH satisfy that: the sum of powers of the configured dedicated PDCCH, the configured dedicated PDSCH of the central area of the cell, the configured central CRS, the configured dedicated PDCCH, the configured dedicated PDSCH of the marginal area of the cell, the configured marginal CRS, the configured common CRS and the configured common channel of the cell is, on a same symbol, not greater than the maximum power of the cell.

Obviously, those skilled in the art can make various modifications and variations to the disclosure without departing from the concept and scope of the disclosure. Thus, if these modifications and variations of the disclosure fall within the scope of the claims of the disclosure and equivalent technologies thereof, the disclosure is also intended to include these modifications and variants.

### INDUSTRIAL APPLICABILITY

With the method and the apparatus for configuring a CRS provided by the embodiments of the disclosure, the CRS is divided into a central CRS, a marginal CRS and a common CRS on the basis of dividing a cell into a central area and a marginal area in the existing ICIC technology, wherein the EPRE of the central CRS is reduced by certain power on the basis of a preset reference EPRE, and the EPRE of the marginal CRS is raised by certain power on the basis of the preset reference EPRE. Therefore, without affecting the downlink performance of a UE in the central area of a cell, an SINR of a marginal area of the cell can be improved and the downlink performance of a UE in the marginal area of the cell can be enhanced.

Since the power of the CRS is adjusted on the basis of a reference, this adjustment can be considered as transparent adjustment for the UE. Therefore, no impact is caused to the UE in measuring a downlink Channel Quality Indicator (CQI) under a full bandwidth, no impact is caused to cell reselection and handover of the UE, and a small impact is caused to an existing network, which facilitates implementation of the disclosure in the existing network.

## Claims

1. A method for configuring a Cell-Specific Reference Signal (CRS), which comprises: dividing a cell into a central area and a marginal area, **characterised in that**, the method further comprises:
dividing the CRS into a central CRS, a marginal CRS and a common CRS, wherein the central CRS is a CRS which is located on a transmission resource section used in the central area of the cell and is on a same symbol as a dedicated channel of the central area; the marginal CRS is a CRS which is located on a transmission resource section used in the marginal area of the cell and is on a same symbol as a dedicated channel of the marginal area; and the common CRS is a CRS other than the central CRS and the marginal CRS, which is adjacent to a downlink common channel in frequency domain and is on a same symbol as the downlink common channel;
configuring a value that is obtained by adding a fixed first power value to a preset reference Energy Per Resource Element (EPRE), as an EPRE value of the marginal CRS;
configuring a value that is obtained by subtracting a fixed second power value from the preset reference EPRE, as an EPRE value of the central CRS; and
configuring the preset reference EPRE as an EPRE value of the common CRS.

2. The method according to claim 1, wherein the dedicated channel comprises:
a Physical Downlink Shared Channel (PDSCH) bearing User Equipment (UE) dedicated data and a Physical Downlink Control Channel (PDCCH) bearing UE dedicated scheduling information.

3. The method according to claim 2, wherein when the transmission resource is frequency domain resource, the first power value and the second power value are determined through:
determining a first difference between an EPRE of a preset dedicated PDSCH of the marginal area of the cell and the preset reference EPRE, and determining a second difference between an EPRE of a preset dedicated PDSCH of the central area of the cell and the preset reference EPRE; and
setting the first difference as the first power value, and setting the second difference as the second power value;
wherein the first difference, the first power value, the second difference and the second power value satisfy that: a sum of, a configured power of the dedicated PDSCH of the central area of the cell and a configured power of the central CRS, a configured power of the dedicated PDSCH of the marginal area of the cell and a configured power of the marginal CRS, and a configured power of the common CRS and a configured power of the common channel of the cell is, on a same symbol, not greater than a maximum power of the cell.

4. The method according to claim 2, wherein when the transmission resource is frequency domain resource, the first power value and the second power value are determined through:
determining a first difference between an EPRE of a preset dedicated PDSCH of the marginal area of the cell and the preset reference EPRE, and determining a second difference between an EPRE of a preset dedicated PDSCH of the central area of the cell and the preset reference EPRE; and
according to a result of system simulation and network testing, adjusting the first difference to obtain the first power value, and adjusting the second difference to obtain the second power value;
wherein the first difference, the first power value, the second difference and the second power value satisfy that: a sum of, a configured power of the dedicated PDSCH of the central area of the cell and a configured power of the central CRS, a configured power of the dedicated PDSCH of the marginal area of the cell and a configured power of the marginal CRS, and a configured power of the common CRS and a configured power of the common channel of the cell is, on a same symbol, not greater than a maximum power of the cell.

5. The method according to claim 2, wherein when the transmission resource is time domain resource, the first power value and the second power value are determined through:
determining a first difference between an EPRE of a preset dedicated PDSCH of the marginal area of the cell and the preset reference EPRE;
setting the first difference as a first power value of a marginal CRS which is on the same symbol as the dedicated PDSCH;
determining a second difference between an EPRE of a preset dedicated PDSCH of the central area of the cell and the preset reference EPRE;
setting the second difference as a second power value of a central CRS which is on the same symbol as the dedicated PDSCH;
determining a third difference between an EPRE of a preset dedicated PDCCH of the marginal area of the cell and the preset reference EPRE;
setting the third difference as a first power value of a marginal CRS which is on the same symbol as the dedicated PDCCH;
determining a fourth difference between an EPRE of a preset dedicated PDCCH of the central area of the cell and the preset reference EPRE; and
setting the fourth difference as a second power value of a central CRS which is on the same symbol as the dedicated PDCCH;
wherein the first difference, the first power value of the marginal CRS which is on the same symbol as the dedicated PDSCH, the second difference, the second power value of the central CRS which is on the same symbol as the dedicated PDSCH, the third difference, the first power value of the marginal CRS which is on the same symbol as the dedicated PDCCH, and the fourth difference and the second power value of the central CRS which is on the same symbol as the dedicated PDCCH satisfy that: a sum of, a configured power of the dedicated PDCCH of the central area of the cell and a configured power of the dedicated PDSCH of the central area of the cell and a configured power of the central CRS, a configured power of the dedicated PDCCH of the marginal area of the cell and a configured power of the dedicated PDSCH of the marginal area of the cell and a configured power of the marginal CRS, and a configured power of the common CRS and a configured power of the common channel of the cell is, on a same symbol, not greater than a maximum power of the cell.

6. The method according to claim 2, wherein when the transmission resource is time domain resource, the first power value and the second power value are determined through:
determining a first difference between an EPRE of a preset dedicated PDSCH of the marginal area of the cell and the preset reference EPRE; determining a second difference between an EPRE of a preset dedicated PDSCH of the central area of the cell and the preset reference EPRE; determining a third difference between an EPRE of a preset dedicated PDCCH of the marginal area of the cell and the preset reference EPRE; and determining a fourth difference between an EPRE of a preset dedicated PDCCH of the central area of the cell and the preset reference EPRE; and
according to a result of system simulation and network testing, adjusting the first difference, the second difference, the third difference and the fourth difference respectively to obtain the first power value of the marginal CRS which is on the same symbol as the dedicated PDSCH, the second power value of the central CRS which is on the same symbol as the dedicated PDSCH, the first power value of the marginal CRS which is on the same symbol as the dedicated PDCCH and the second power value of the central CRS which is on the same symbol as the dedicated PDCCH;
wherein the first difference, the first power value of the marginal CRS which is on the same symbol as the dedicated PDSCH, the second difference, the second power value of the central CRS which is on the same symbol as the dedicated PDSCH, the third difference, the first power value of the marginal CRS which is on the same symbol as the dedicated PDCCH, and the fourth difference and the second power value of the central CRS which is on the same symbol as the dedicated PDCCH satisfy that: a sum of, a configured power of the dedicated PDCCH of the central area of the cell and a configured power of the dedicated PDSCH of the central area of the cell and a configured power of the central CRS, a configured power of the dedicated PDCCH of the marginal area of the cell and a configured power of the dedicated PDSCH of the marginal area of the cell and a configured power of the marginal CRS, and a configured power of the common CRS and a configured power of the common channel of the cell is, on a same symbol, not greater than a maximum power of the cell.

7. The method according to claim 4 or 6, further comprising:
informing, through a signalling reconfiguration message, a UE in the cell of a power difference between the configured EPRE of the dedicated PDSCH of the marginal area of the cell and the configured EPRE of the marginal CRS which is on the same symbol as the dedicated PDSCH and a power difference between the configured EPRE of the dedicated PDSCH of the central area of the cell and the configured EPRE of the central CRS which is on the same symbol as the dedicated PDSCH.

8. An apparatus for configuring a Cell-Specific Reference Signal (CRS), comprising:
a cell division unit, configured to divide a cell into a central area and a marginal area;
**characterised in that**, the apparatus further comprises:
a CRS division unit, configured to divide the CRS into a central CRS, a marginal CRS and a common CRS, wherein the central CRS is a CRS which is located on a transmission resource section used in the central area of the cell and is on a same symbol as a dedicated channel of the central area; the marginal CRS is a CRS which is located on a transmission resource section used in the marginal area of the cell and is on a same symbol as a dedicated channel of the marginal area; and the common CRS is a CRS other than the central CRS and the marginal CRS, which is adjacent to a downlink common channel in frequency domain and is on the same symbol as the downlink common channel; and
a configuration unit, configured to: configure a value that is obtained by adding a fixed first power value to a preset reference Energy Per Resource Element (EPRE), as an EPRE value of the marginal CRS; configure a value that is obtained by subtracting a fixed second power value from the preset reference EPRE, as an EPRE value of the central CRS; and configure the preset reference EPRE as an EPRE value of the common CRS.

9. The apparatus according to claim 8, wherein when the transmission resource is frequency domain resource, the configuration unit comprises:
a determination subunit, configured to determine a first difference between an EPRE of a preset dedicated Physical Downlink Shared Channel (PDSCH) of the marginal area of the cell and the preset reference EPRE, and determine a second difference between an EPRE of a preset dedicated PDSCH of the central area of the cell and the preset reference EPRE; and
a value setting subunit, configured to set the first difference as the first power value and set the second difference as the second power value;
wherein the first difference, the first power value, the second difference and the second power value satisfy that: a sum of, a configured power of the dedicated PDSCH of the central area of the cell and a configured power of the central CRS, a configured power of the dedicated PDSCH of the marginal area of the cell and a configured power of the marginal CRS, and a configured power of the common CRS and a configured power of the common channel of the cell is, on a same symbol, not greater than a maximum power of the cell.

10. The apparatus according to claim 8, wherein when the transmission resource is frequency domain resource, the configuration unit comprises:
a determination subunit, configured to determine a first difference between an EPRE of a preset dedicated PDSCH of the marginal area of the cell and the preset reference EPRE, and determine a second difference between an EPRE of a preset dedicated PDSCH of the central area of the cell and the preset reference EPRE; and
a value setting subunit, configured to, according to a result of system simulation and network testing, adjust the first difference to obtain the first power value and adjust the second difference to obtain the second power value;
wherein the first difference, the first power value, the second difference and the second power value satisfy that: a sum of, a configured power of the dedicated PDSCH of the central area of the cell and a configured power of the central CRS, a configured power of the dedicated PDSCH of the marginal area of the cell and a configured power of the marginal CRS, and a configured power of the common CRS and a configured power of the common channel of the cell is, on a same symbol, not greater than a maximum power of the cell.

11. The apparatus according to claim 8, wherein when the transmission resource is time domain resource, the configuration unit comprises:
a determination sub-unit, configured to: determine a first difference between an EPRE of a preset dedicated PDSCH of the marginal area of the cell and the preset reference EPRE; determine a second difference between an EPRE of a preset dedicated PDSCH of the central area of the cell and the preset reference EPRE; determine a third difference between an EPRE of a preset dedicated Physical Downlink Control Channel (PDCCH) of the marginal area of the cell and the preset reference EPRE; and determine a fourth difference between an EPRE of a preset dedicated PDCCH of the central area of the cell and the preset reference EPRE; and
a value setting subunit, configured to: set the first difference as a first power value of a marginal CRS which is on the same symbol as the dedicated PDSCH; set the second difference as a second power value of a central CRS which is on the same symbol as the dedicated PDSCH; set the third difference as a first power value of a marginal CRS which is on the same symbol as the dedicated PDCCH; and set the fourth difference as a second power value of a central CRS which is on the same symbol as the dedicated PDCCH;
wherein the first difference, the first power value of the marginal CRS which is on the same symbol as the dedicated PDSCH, the second difference, the second power value of the central CRS which is on the same symbol as the dedicated PDSCH, the third difference, the first power value of the marginal CRS which is on the same symbol as the dedicated PDCCH, and the fourth difference and the second power value of the central CRS which is on the same symbol as the dedicated PDCCH satisfy that: a sum of, a configured power of the dedicated PDCCH of the central area of the cell and a configured power of the dedicated PDSCH of the central area of the cell and a configured power of the central CRS, a configured power of the dedicated PDCCH of the marginal area of the cell and a configured power of the dedicated PDSCH of the marginal area of the cell and a configured power of the marginal CRS, and a configured power of the common CRS and a configured power of the common channel of the cell is, on a same symbol, not greater than a maximum power of the cell.

12. The apparatus according to claim 8, wherein when the transmission resource is time domain resource, the configuration unit comprises:
a determination sub-unit, configured to: determine a first difference between an EPRE of a preset dedicated PDSCH of the marginal area of the cell and the preset reference EPRE; determine a second difference between an EPRE of a preset dedicated PDSCH of the central area of the cell and the preset reference EPRE; determine a third difference between an EPRE of a preset dedicated PDCCH of the marginal area of the cell and the preset reference EPRE; and determine a fourth difference between an EPRE of a preset dedicated PDCCH of the central area of the cell and the preset reference EPRE; and
a value setting subunit, configured to: according to a result of system simulation and network testing, adjust the first difference, the second difference, the third difference and the fourth difference respectively to obtain the first power value of the marginal CRS which is on the same symbol as the dedicated PDSCH, the second power value of the central CRS which is on the same symbol as the dedicated PDSCH, the first power value of the marginal CRS which is on the same symbol as the dedicated PDCCH and the second power value of the central CRS which is on the same symbol as the dedicated PDCCH;
wherein the first difference, the first power value of the marginal CRS which is on the same symbol as the dedicated PDSCH, the second difference, the second power value of the central CRS which is on the same symbol as the dedicated PDSCH, the third difference, the first power value of the marginal CRS which is on the same symbol as the dedicated PDCCH, and the fourth difference and the second power value of the central CRS which is on the same symbol as the dedicated PDCCH satisfy that: a sum of, a configured power of the dedicated PDCCH of the central area of the cell and a configured power of the dedicated PDSCH of the central area of the cell and a configured power of the central CRS, a configured power of the dedicated PDCCH of the marginal area of the cell and a configured power of the dedicated PDSCH of the marginal area of the cell and a configured power of the marginal CRS, and a configured power of the common CRS and a configured power of the common channel of the cell is, on a same symbol, not greater than a maximum power of the cell.

13. The apparatus according to claim 10 or 12, further comprising:
a signalling reconfiguration message transmitting unit, configured to inform, through a signalling reconfiguration message, a User Equipment (UE) in the cell of a power difference between the configured EPRE of the dedicated PDSCH of the marginal area of the cell and the configured EPRE of the marginal CRS which is on the same symbol as the dedicated PDSCH and a power difference between the configured EPRE of the dedicated PDSCH of the central area of the cell and the configured EPRE of the central CRS which is on the same symbol as the dedicated PDSCH.

## Patentansprüche

1. Verfahren zum Konfigurieren eines zellspezifischen Referenzsignals (CRS), welches umfasst: Unterteilen einer Zelle in einen zentralen Bereich und einen Randbereich, **dadurch gekennzeichnet, dass** das Verfahren weiter umfasst:
Unterteilen des CRS in ein zentrales CRS, ein Rand-CRS und ein herkömmliches CRS, wobei das zentrale CRS ein CRS ist, welches auf einem Übertragungsressourcenbereich platziert ist, welcher in dem zentralen Bereich der Zelle verwendet wird und sich auf einem gleichen Symbol befindet wie ein zugehöriger Kanal des zentralen Bereichs; das Rand-CRS ist ein CRS, welches auf einem Übertragungsressourcenbereich platziert ist, welcher in dem Randbereich der Zelle verwendet wird und sich auf einem gleichen Symbol ist, wie ein zugehöriger Kanal des Randbereichs; und das herkömmliche CRS ist ein CRS anders als das zentrale CRS und das Rand-CRS, welches an einen herkömmlichen Downlink-Kanal im Frequenzbereich angrenzt und sich auf einem gleichen Symbol wie der herkömmliche Downlink-Kanal befindet;
Konfigurieren eines Wertes, welcher durch das Hinzufügen eines festgelegten ersten Leistungswertes erhalten wird zu einem voreingestellten Bezugs-Energie-pro-Ressource-Element (EPRE), als ein EPRE-Wert des Rand-CRS erhalten wird;
Konfigurieren eines Wertes, welcher durch Abziehen eines festgelegten zweiten Leistungswertes von dem voreingestellten Bezugs-EPRE, als ein EPRE-Wert des zentralen CRS erhalten wird; und
Konfigurieren des voreingestellten Bezugs-EPRE als ein EPRE-Wert des herkömmlichen CRS.

2. Verfahren nach Anspruch 1, wobei der zugehörige Kanal umfasst:
einen Physical-Downlink-Shared-Kanal (PDSCH), welcher die zu dem Nutzergerät (UE) zugehörigen Daten trägt und einen Physical-Downlink-Steuerkanal (PDCCH), welcher die dem UE zugehörige Planungsinformation trägt.

3. Verfahren nach Anspruch 2, wobei, wenn die Übertragungsressource eine Frequenzbereichsressource ist, der erste Leistungswert und der zweite Leistungswert bestimmt werden durch:
Bestimmen einer ersten Differenz zwischen einem EPRE eines voreingestellten zugehörigen PDSCH des Randbereichs der Zelle und dem voreingestellten Bezugs-EPRE und Bestimmen einer zweiten Differenz zwischen einem EPRE eines voreingestellten zugehörigen PDSCH des zentralen Bereichs der Zelle und dem voreingestellten Bezugs-EPRE; und
Setzen der ersten Differenz als den ersten Leistungswert und Setzen der zweiten Differenz als den zweiten Leistungswert;
wobei die erste Differenz, der erste Leistungswert, die zweite Differenz und der zweite Leistungswert erfüllen, dass: eine Summe von einer konfigurierten Leistung des zugehörigen PDSCH des zentralen Bereichs der Zelle und einer konfigurierten Leistung des zentralen CRS, einer konfigurierten Leistung des zugehörigen PDSCH des Randbereichs der Zelle und einer konfigurierten Leistung des Rand-CRS und einer konfigurierten Leistung des herkömmlichen Kanals der Zelle auf einem gleichen Symbol nicht größer ist als eine maximale Leistung der Zelle.

4. Verfahren nach Anspruch 2, wobei, wenn die Übertragungsressource eine Frequenzbereichsressource ist, der erste Leistungswert und der zweite Leistungswert bestimmt sind durch:
Bestimmen einer ersten Differenz zwischen einem EPRE eines voreingestellten zugehörigen PDSCH des Randbereichs der Zelle und dem voreingestellten Bezugs-EPRE und Bestimmen einer zweiten Differenz zwischen einem EPRE eines voreingestellten zugehörigen PDSCH des zentralen Bereichs der Zelle und dem voreingestellten Bezugs-EPRE; und
gemäß einem Ergebnis einer Systemsimulation und einem Netzwerktest, Einstellen der ersten Differenz, um den ersten Leistungswert zu erhalten und Einstellen der zweiten Differenz, um den zweiten Leistungswert zu erhalten;
wobei die erste Differenz, der erste Leistungswert, die zweite Differenz und der zweite Leistungswert erfüllen, dass eine Summe einer konfigurierten Leistung des zugehörigen PDSCH des zentralen Bereichs der Zelle und einer konfigurierten Leistung des zentralen CRS, eine konfigurierte Leistung der zugehörigen PDSCH des Randbereichs der Zelle und einer konfigurierten Leistung des Rand-CRS und einer konfigurierten Leistung des herkömmlichen CRS und einer konfigurierten Leistung des herkömmlichen Kanals der Zellen auf einem gleichen Symbol nicht größer als eine maximale Leistung der Zelle ist.

5. Verfahren nach Anspruch 2, wobei, wenn die Übertragungsressource eine Zeitbereichsressource ist, der erste Leistungswert und der zweite Leistungswert bestimmt werden durch:
Bestimmen einer ersten Differenz zwischen einem EPRE eines voreingestellten zugehörigen PDSCH des Randbereichs der Zelle und dem voreingestellten Bezugs-EPRE;
Setzen der ersten Differenz als einen ersten Leistungswert eines Rand-CRS, welches sich auf demselben Symbol wie der zugehörige PDSCH befindet;
Bestimmen einer zweiten Differenz zwischen einem EPRE eines voreingestellten zugehörigen PDSCH des zentralen Bereichs der Zelle und des voreingestellten Bezugs-EPRE;
Setzen der zweiten Differenz als einen zweiten Leistungswert eines zentralen CRS, welcher sich auf demselben Symbol befindet wie der zugehörige PDSCH;
Bestimmen einer dritten Differenz zwischen einem EPRE eines voreingestellten zugehörigen PDCCH des Randbereichs der Zelle und dem voreingestellten Bezugs-EPRE;
Setzen der dritten Differenz als einen ersten Leistungswert eines Rand-CRS, welches sich auf demselben Symbol befindet wie der zugehörige PDCCH;
Bestimmen einer vierten Differenz zwischen einem EPRE eines voreingestellten zugehörigen PDCCH des zentralen Bereichs der Zelle und dem voreingestellten Bezugs-EPRE; und
Setzen der vierten Differenz als einen zweiten Leistungswert eines zentralen CRS, welches sich auf demselben Symbol befindet wie der zugehörige PDCCH;
wobei die erste Differenz, der erste Leistungswert des Rand-CRS, welches sich auf demselben Symbol befindet wie der zugehörige PDSCH, die zweite Differenz, der zweite Leistungswert des zentralen CRS, welches sich auf demselben Symbol befindet wie der zugehörige PDSCH, die dritte Differenz, der erste Leistungswert des Rand-CRS, welches sich auf demselben Symbol befindet wie der zugehörige PDCCH und die vierte Differenz und der zweite Leistungswert des zentralen CRS, welches sich auf demselben Symbol befindet wie der zugehörige PDCCH erfüllen, dass: eine Summe einer konfigurierten Leistung des zugehörigen PDCCH des zentralen Bereichs der Zelle und eine konfigurierte Leistung des zugehörigen PDSCH des zentralen Bereichs der Zelle und eine konfigurierte Leistung des zentralen CRS, eine konfigurierte Leistung des zugehörigen PDCCH des Randbereichs der Zelle und eine konfigurierte Leistung des zugehörigen PDSCH des Randbereichs der Zelle und eine konfigurierte Leistung des Rand-CRS und eine konfigurierte Leistung des herkömmlichen CRS und eine konfigurierte Leistung des herkömmlichen Kanals der Zelle auf einem gleichen Symbol nicht größer ist als eine maximale Leistung der Zelle.

6. Verfahren nach Anspruch 2, wobei, wenn die Übertragungsressource eine Zeitbereichsressource ist, der erste Leistungswert und der zweite Leistungswert bestimmt werden durch:
Bestimmen einer ersten Differenz zwischen einem EPRE eines voreingestellten zugehörigen PDSCH des Randbereichs der Zelle und dem voreingestellten Bezugs-EPRE; Bestimmen einer zweiten Differenz zwischen einem EPRE eines voreingestellten zugehörigen PDSCH des zentralen Bereichs der Zelle und dem voreingestellten Bezugs-EPRE; Bestimmen einer dritten Differenz zwischen einem EPRE eines voreingestellten zugehörigen PDCCH des Randbereichs der Zelle und dem voreingestellten Bezugs-EPRE;
und Bestimmen einer vierten Differenz zwischen einem EPRE eines voreingestellten zugehörigen PDCCH des zentralen Bereichs der Zelle und dem voreingestellten Bezugs-EPRE; und
gemäß einem Ergebnis der Systemsimulation und dem Netzwerktest, Einstellen jeweils der ersten Differenz, der zweiten Differenz, der dritten Differenz und der vierten Differenz, um den ersten Leistungswert des Rand-CRS, welches sich auf demselben Symbol befindet wie der zugehörige PDSCH, den zweiten Leistungswert des zentralen CRS, welches sich auf demselben Symbol befindet wie der zugehörige PDSCH, den ersten Leistungswert des Rand-CRS, welches sich auf demselben Symbol befindet wie der zugehörige PDCCH und den zweiten Leistungswert des zentralen CRS zu erhalten, welches sich auf demselben Symbol befindet wie der zugehörige PDCCH;
wobei die erste Differenz, der erste Leistungswert des Rand-CRS, welches sich auf demselben Symbol befindet wie der zugehörige PDSCH, die zweite Differenz, der zweite Leistungswert des zentralen CRS, welches sich auf demselben Symbol befindet wie der zugehörige PDSCH, die dritte Differenz, der erste Leistungswert des Rand-CRS, welches sich auf demselben Symbol befindet wie der zugehörige PDCCH und die vierte Differenz und der zweite Leistungswert des zentralen CRS, welches sich auf demselben Symbol befindet wie der zugehörige PDCCH, erfüllen, dass: eine Summe einer konfigurierten Leistung des zugehörigen PDCCH des zentralen Bereiches der Zelle und einer konfigurierten Leistung des zugehörigen PDSCH des zentralen Bereiches der Zelle und einer konfigurierten Leistung des zentralen CRS, einer konfigurierten Leistung des zugehörigen PDCCH des Randbereichs der Zelle und einer konfigurierten Leistung des zugehörigen PDSCH des Randbereichs der Zelle und einer konfigurierten Leistung des Rand-CRS und einer konfigurierten Leistung des herkömmlichen CRS und einer konfigurierten Leistung des herkömmlichen Kanals der Zelle auf demselben Symbol nicht größer ist als eine maximale Leistung der Zelle.

7. Verfahren nach Anspruch 4 oder 6, weiter umfassend:
Benachrichtigen eines UE in der Zelle, durch eine Signalisierungsrekonfigurationsnachricht über eine Leistungsdifferenz zwischen dem konfigurierten EPRE des zugehörigen PDSCH des Randbereichs der Zelle und dem konfigurierten EPRE des Rand-CRS, welches sich auf demselben Symbol befindet wie der zugehörige PDSCH und eine Leistungsdifferenz zwischen dem konfigurierten EPRE des zugehörigen PDSCH des zentralen Bereichs der Zelle und dem konfigurierten EPRE des zentralen CRS, welches sich auf demselben Symbol befindet wie der zugehörige PDSCH.

8. Vorrichtung zum Konfigurieren eines zellspezifischen Referenzsignals (CRS), umfassend:
eine Zellenteileinheit, welche ausgestaltet ist, um eine Zelle in einen zentralen Bereich und einen Randbereich zu teilen;
**dadurch gekennzeichnet, dass** die Vorrichtung weiter umfasst:
eine CRS-Teileinheit, welche ausgestaltet ist, das CRS in ein zentrales CRS, ein Rand-CRS und ein herkömmliches CRS aufzuteilen, wobei das zentrale CRS ein CRS ist, welches auf einem Übertragungsressourcenbereich platziert ist, welcher in dem zentralen Bereich der Zelle verwendet wird und sich auf einem gleichen Symbol befindet wie ein zugehöriger Kanal des zentralen Bereichs; der Rand-CRS ein CRS ist, welches auf einem Übertragungsressourcenbereich platziert ist, welche in dem Randbereich der Zelle verwendet wird und sich auf einem gleichen Symbol befindet wie ein zugehöriger Kanal des Randbereichs; und das herkömmliche CRS ein CRS ist, anders als das zentrale CRS und das Rand-CRS, welches an einen herkömmlichen Downlinkkanal im Frequenzbereich angrenzt und sich auf demselben Symbol befindet wie der herkömmliche Downlinkkanal; und
eine Konfigurationseinheit, konfiguriert zum: Konfigurieren eines Wertes, welcher durch Hinzufügen eines festgelegten ersten Leistungswerts zu einem voreingestellten Energie-pro-Ressource-Element (EPRE) erreicht wird, als ein EPRE-Wert des Rand-CRS; Konfigurieren eines Wertes, welcher durch Abziehen eines festgelegten zweiten Leistungswerts von dem voreingestellten Bezugs-EPRE erhalten wird, als ein EPRE-Wert des zentralen CRS; und Konfigurieren des voreingestellten Bezugs-EPRE als einen EPRE-Wert des herkömmlichen CRS.

9. Vorrichtung nach Anspruch 8, wobei, wenn die Übertragungsressource eine Frequenzbereichsressource ist, die Konfigurationseinheit Folgendes umfasst:
eine Bestimmungsuntereinheit, welche ausgestaltet ist, eine erste Differenz zwischen einem EPRE eines voreingestellten zugehörigen Physical-Downlink-Shared-Kanal (PDSCH) des Randbereichs der Zelle und dem voreingestellten Bezugs-EPRE, und eine zweite Differenz zwischen einem EPRE eines voreingestellten zugehörigen PDSCH des zentralen Bereichs der Zelle und dem voreingestellten Bezugs-EPRE zu bestimmen; und
eine Wertsetzuntereinheit, welche ausgestaltet ist, die erste Differenz als den ersten Leistungswert und die zweite Differenz als den zweiten Leistungswert zu setzen;
wobei die erste Differenz, der erste Leistungswert, die zweite Differenz und der zweite Leistungswert erfüllen, dass: eine Summe aus einer konfigurierten Leistung des zugehörigen PDSCH des zentralen Bereichs der Zelle und einer konfigurierten Leistung des zentralen CRS, einer konfigurierten Leistung des zugehörigen PDSCH des Randbereichs der Zelle und eine konfigurierte Leistung des Rand-CRS und einer konfigurierten Leistung des herkömmlichen CRS und einer konfigurierten Leistung des herkömmlichen Kanals der Zelle auf einem selben Symbol nicht größer ist als eine maximale Leistung der Zelle.

10. Vorrichtung nach Anspruch 8, wobei, wenn die Übertragungsressource eine Frequenzbereichsressource ist, die Konfigurationseinheit umfasst:
eine Bestimmungsuntereinheit, welche ausgestaltet ist, eine erste Differenz zwischen einem EPRE eines voreingestellten zugehörigen PDSCH des Randbereichs der Zelle und dem voreingestellten Bezugs-EPRE und einer zweiten Differenz zwischen einem EPRE eines voreingestellten zugehörigen PDSCH des zentralen Bereichs der Zelle und dem voreingestellten Bezugs-EPRE zu bestimmen; und
eine Wertsetzuntereinheit, welche ausgestaltet ist, gemäß einem Ergebnis der Systemsimulation und dem Netzwerktest, die erste Differenz anzupassen, um den ersten Leistungswert zu erhalten und die zweite Differenz anzupassen, um den zweiten Leistungswert zu erhalten;
wobei die erste Differenz, der erste Leistungswert, die zweite Differenz und der zweite Leistungswert erfüllen, dass: eine Summe aus einer konfigurierten Leistung des zugehörigen PDSCH des zentralen Bereichs der Zelle und einer konfigurierten Leistung des zentralen CRS, einer konfigurierten Leistung des zugehörigen PDSCH des Randbereichs der Zelle und eine konfigurierte Leistung des Rand-CRS und einer konfigurierten Leistung des herkömmlichen CRS und einer konfigurierten Leistung des herkömmlichen Kanals der Zelle auf einem selben Symbol nicht größer ist als eine maximale Leistung der Zelle.

11. Vorrichtung nach Anspruch 8, wobei, wenn die Übertragungsressource eine Zeitbereichsressource ist, die Konfigurationseinheit umfasst:
eine Bestimmungsuntereinheit, welche ausgestaltet ist zum: Bestimmen einer ersten Differenz zwischen einem EPRE eines voreingestellten zugehörigen PDSCH des Randbereichs der Zelle und dem voreingestellten Bezugs-EPRE; Bestimmen einer zweiten Differenz zwischen einem EPRE eines voreingestellten zugehörigen PDSCH des zentralen Bereichs der Zelle und dem voreingestellten Bezugs-EPRE; Bestimmen einer dritten Differenz zwischen einem EPRE eines voreingestellten zugehörigen Pysical-Downlink-Control-Kanals (PDCCH) des Randbereichs der Zelle und dem voreingestellten Bezugs-EPRE; und Bestimmen einer vierten Differenz zwischen einem EPRE eines voreingestellten zugehörigen PDCCH des zentralen Bereichs der Zelle und dem voreingestellten EPRE; und
eine Wertsetzuntereinheit, welche ausgestaltet ist zum: Setzen der ersten Differenz als einen ersten Leistungswert eines Rand-CRS, welches sich auf demselben Symbol befindet wie der zugehörige PDSCH; Setzen der zweiten Differenz als einen zweiten Leistungswert eines zentralen CRS, welches sich auf demselben Symbol befindet wie der zugehörige PDSCH; Setzen der dritten Differenz als einen ersten Leistungswert eines Rand-CRS, welches sich auf demselben Symbol befindet wie der zugehörige PDCCH; und Setzen der vierten Differenz als einen zweiten Leistungswert eines zentralen CRS, welches sich auf demselben Symbol befindet wie der zugehörige PDCCH;
wobei die erste Differenz, der erste Leistungswert des Rand-CRS, welches sich auf demselben Symbol befindet wie der zugehörige PDSCH, die zweite Differenz, der zweite Leistungswert des zentralen CRS, welches sich auf demselben Symbol befindet wie der zugehörige PDSCH, die dritte Differenz, der erste Leistungswert des Rand-CRS, welches sich auf demselben Symbol befindet wie der zugehörige PDCCH, und die vierte Differenz und der zweite Leistungswert des zentralen CRS, welches sich auf demselben Symbol befindet wie der zugehörige PDCCH erfüllen, dass: eine Summe aus einer konfigurierten Leistung des zugehörigen PDCCH des zentralen Bereichs der Zelle und einer konfigurierten Leistung des zugehörigen PDSCH des zentralen Bereichs der Zelle und einer konfigurierten Leistung des zentralen CRS, einer konfigurierten Leistung des zugehörigen PDCCH des Randbereichs der Zelle und einer konfigurierten Leistung des zugehörigen PDSCH des Randbereichs der Zelle und einer konfigurierten Energie des Rand-CRS, und einer konfigurierten Leistung des herkömmlichen CRS und einer konfigurierten Leistung des herkömmlichen Kanals der Zelle auf einem selben Symbol nicht größer ist als eine maximale Leistung der Zelle.

12. Vorrichtung nach Anspruch 8, wobei, wenn die Übertragungsressource eine Zeitbereichsressource ist, die Konfigurationseinheit umfasst:
eine Bestimmungsuntereinheit, welche ausgestaltet ist zum: Bestimmen einer ersten Differenz zwischen einem EPRE eines voreingestellten zugehörigen PDSCH des Randbereichs der Zelle und dem voreingestellten Bezugs-EPRE; Bestimmen einer zweiten Differenz zwischen einem EPRE eines voreingestellten zugehörigen PDSCH des zentralen Bereichs der Zelle und dem voreingestellten Bezugs-EPRE; Bestimmen einer dritten Differenz zwischen einem EPRE eines voreingestellten zugehörigen PDCCH des Randbereichs der Zelle und dem voreingestellten Bezugs-EPRE; und Bestimmen einer vierten Differenz zwischen einem EPRE eines voreingestellten zugehörigen PDCCH des zentralen Bereichs der Zelle und dem voreingestellten Bezugs-EPRE; und
eine Wertsetzuntereinheit, welche ausgestaltet ist zum: Einstellen jeweils der ersten Differenz, der zweiten Differenz, der dritten Differenz und der vierten Differenz gemäß einem Ergebnis der Systemsimulation und dem Netzwerktest, um den ersten Leistungswert des Rand-CRS, welches sich auf demselben Symbol befindet wie der zugehörige PDSCH, den zweiten Leistungswert des zentralen CRS, welches sich auf demselben Symbol befindet wie der zugehörige PDSCH, den ersten Leistungswert des Rand-CRS, welches sich auf demselben Symbol befindet wie der zugehörige PDCCH und den zweiten Leistungswert des zentralen CRS zu erhalten, welches sich auf demselben Symbol befindet wie der zugehörige PDCCH;
wobei die erste Differenz, der erste Leistungswert des Rand-CRS, welches sich auf demselben Symbol befindet wie der zugehörige PDSCH, die zweite Differenz, der zweite Leistungswert des zentralen CRS, welches sich auf demselben Symbol befindet wie der zugehörige PDSCH, die dritte Differenz, der erste Leistungswert des Rand-CRS, welches sich auf demselben Symbol befindet wie der zugehörige PDCCH und die vierte Differenz und der zweite Leistungswert des zentralen CRS, welches sich auf demselben Symbol befindet wie der zugehörige PDCCH erfüllen, dass: eine Summe aus einer konfigurierten Leistung des zugehörigen PDCCH des zentralen Bereichs der Zelle und einer konfigurierten Leistung des zugehörigen PDSCH des zentralen Bereichs der Zelle und einer konfigurierten Leistung des zentralen CRS, einer konfigurierten Leistung des zugehörigen PDCCH des Randbereichs der Zelle und einer konfigurierten Leistung des zugehörigen PDSCH des Randbereichs der Zelle und einer konfigurierten Leistung des Rand-CRS, und einer konfigurierten Leistung des herkömmlichen CRS und einer konfigurierten Leistung des herkömmlichen Kanals der Zelle auf einem selben Symbol nicht größer ist als eine maximale Leistung der Zelle.

13. Vorrichtung nach einem der Ansprüche 10 oder 12, weiter umfassend:
eine Einheit zur Übertragung einer Signalisierungsrekonfigurationsnachricht, welche ausgestaltet ist, über eine Signalisierungsrekonfigurationsnachricht ein Nutzergerät (UE) in der Zelle über eine Leistungsdifferenz zwischen dem konfigurierten EPRE des zugehörigen PDSCH des Randbereichs der Zelle und dem konfigurierten EPRE des Rand-CRS, welches sich auf demselben Symbol befindet wie der zugehörige PDSCH und eine Leistungsdifferenz zwischen dem konfigurierten EPRE des zugehörigen PDSCH des zentralen Bereichs der Zelle und dem konfigurierten EPRE des zentralen CRS, welches sich auf demselben Symbol befindet wie der zugehörige PDSCH, zu informieren.

## Revendications

1. Procédé pour configurer un signal de référence spécifique à une cellule (CRS), qui comprend: la division d'une cellule en une zone centrale et une zone marginale, **caractérisé en ce que**, le procédé comprend en outre:
la division du CRS en un CRS central, un CRS marginal et un CRS commun, dans lesquels le CRS central est un CRS qui est situé sur une section de ressource de transmission utilisée dans la zone centrale de la cellule et est sur un même symbole qu'un canal dédié de la zone centrale; le CRS marginal est un CRS qui est situé sur une section de ressource de transmission utilisée dans la zone marginale de la cellule et est sur un même symbole qu'un canal dédié de la zone marginale; et le CRS commun est un CRS autre que le CRS central et le CRS marginal, qui est adjacent à un canal commun de liaison descendante dans le domaine fréquentiel et est sur un même symbole que le canal commun de liaison descendante;
la configuration d'une valeur qui est obtenue en ajoutant une première valeur de puissance fixe à une énergie par élément de ressource (EPRE) de référence préétablie, comme une valeur EPRE du CRS marginal;
la configuration d'une valeur qui est obtenue en soustrayant une seconde valeur de puissance fixe de l'EPRE de référence préétablie, comme une valeur EPRE du CRS central; et
la configuration de l'EPRE de référence préétablie comme une valeur EPRE du CRS commun.

2. Procédé selon la revendication 1, **caractérisé en ce que** le canal dédié comprend:
un canal partagé de liaison descendante physique (PDSCH) portant des données dédiées d'équipement d'utilisateur (UE) et un canal de commande de liaison descendante physique (PDCCH) portant des informations d'ordonnancement dédiées d'UE.

3. Procédé selon la revendication 2, **caractérisé en ce que**, lorsque la ressource de transmission est une ressource de domaine fréquentiel, la première valeur de puissance et la seconde valeur de puissance sont déterminées par:
la détermination d'une première différence entre une EPRE d'un PDSCH dédié préétabli de la zone marginale de la cellule et l'EPRE de référence préétablie, et la détermination d'une seconde différence entre une EPRE d'un PDSCH dédié préétabli de la zone centrale de la cellule et l'EPRE de référence préétablie; et
l'établissement de la première différence comme la première valeur de puissance, et l'établissement de la seconde différence comme la seconde valeur de puissance;
dans lesquelles la première différence, la première valeur de puissance, la seconde différence et la seconde valeur de puissance satisfont à ce qui suit: une somme d'une puissance configurée du PDSCH dédié de la zone centrale de la cellule et une puissance configurée du CRS central, une puissance configurée du PDSCH dédié de la zone marginale de la cellule et une puissance configurée du CRS marginal, et une puissance configurée du CRS commun et une puissance configurée du canal commun de la cellule est, sur un même symbole, non supérieure à une puissance maximale de la cellule.

4. Procédé selon la revendication 2, **caractérisé en ce que**, lorsque la ressource de transmission est une ressource de domaine fréquentiel, la première valeur de puissance et la seconde valeur de puissance sont déterminées par:
la détermination d'une première différence entre une EPRE d'un PDSCH dédié préétabli de la zone marginale de la cellule et l'EPRE de référence préétablie, et la détermination d'une seconde différence entre une EPRE d'un PDSCH dédié préétabli de la zone centrale de la cellule et l'EPRE de référence préétablie; et
selon un résultat de simulation de système et de test de réseau, l'ajustement de la première différence pour obtenir la première valeur de puissance, et l'ajustement de la seconde différence pour obtenir la seconde valeur de puissance;
dans lesquelles la première différence, la première valeur de puissance, la seconde différence et la seconde valeur de puissance satisfont à ce qui suit: une somme d'une puissance configurée du PDSCH dédié de la zone centrale de la cellule et une puissance configurée du CRS central, une puissance configurée du PDSCH dédié de la zone marginale de la cellule et une puissance configurée du CRS marginal, et une puissance configurée du CRS commun et une puissance configurée du canal commun de la cellule est, sur un même symbole, non supérieure à une puissance maximale de la cellule.

5. Procédé selon la revendication 2, **caractérisé en ce que**, lorsque la ressource de transmission est une ressource de domaine temporel, la première valeur de puissance et la seconde valeur de puissance sont déterminées par:
la détermination d'une première différence entre une EPRE d'un PDSCH dédié préétabli de la zone marginale de la cellule et l'EPRE de référence préétablie;
l'établissement de la première différence comme une première valeur de puissance d'un CRS marginal qui est sur le même symbole que le PDSCH dédié;
la détermination d'une seconde différence entre une EPRE d'un PDSCH dédié préétabli de la zone centrale de la cellule et l'EPRE de référence préétablie;
l'établissement de la seconde différence comme une seconde valeur de puissance d'un CRS central qui est sur le même symbole que le PDSCH dédié;
la détermination d'une troisième différence entre une EPRE d'un PDCCH dédié préétabli de la zone marginale de la cellule et l'EPRE de référence préétablie;
l'établissement de la troisième différence comme une première valeur de puissance d'un CRS marginal qui est sur le même symbole que le PDCCH dédié;
la détermination d'une quatrième différence entre une EPRE d'un PDCCH dédié préétabli de la zone centrale de la cellule et l'EPRE de référence préétablie; et
l'établissement de la quatrième différence comme une seconde valeur de puissance d'un CRS central qui est sur le même symbole que le PDCCH dédié;
dans lesquelles la première différence, la première valeur de puissance du CRS marginal qui est sur le même symbole que le PDSCH dédié, la seconde différence, la seconde valeur de puissance du CRS central qui est sur le même symbole que le PDSCH dédié, la troisième différence, la première valeur de puissance du CRS marginal qui est sur le même symbole que le PDCCH dédié, et la quatrième différence et la seconde valeur de puissance du CRS central qui est sur le même symbole que le PDCCH dédié satisfont à ce qui suit: une somme d'une puissance configurée du PDCCH dédié de la zone centrale de la cellule et une puissance configurée du PDSCH dédié de la zone centrale de la cellule et une puissance configurée du CRS central, une puissance configurée du PDCCH dédié de la zone marginale de la cellule et une puissance configurée du PDSCH dédié de la zone marginale de la cellule et une puissance configurée du CRS marginal, et une puissance configurée du CRS commun et une puissance configurée du canal commun de la cellule est, sur un même symbole, non supérieure à une puissance maximale de la cellule.

6. Procédé selon la revendication 2, **caractérisé en ce que**, lorsque la ressource de transmission est une ressource de domaine temporel, la première valeur de puissance et la seconde valeur de puissance sont déterminées par:
la détermination d'une première différence entre une EPRE d'un PDSCH dédié préétabli de la zone marginale de la cellule et l'EPRE de référence préétablie; la détermination d'une seconde différence entre une EPRE d'un PDSCH dédié préétabli de la zone centrale de la cellule et l'EPRE de référence préétablie; la détermination d'une troisième différence entre une EPRE d'un PDCCH dédié préétabli de la zone marginale de la cellule et l'EPRE de référence préétablie; et la détermination d'une quatrième différence entre une EPRE d'un PDCCH dédié préétabli de la zone centrale de la cellule et l'EPRE de référence préétablie; et
selon un résultat de simulation de système et de test de réseau, l'ajustement de la première différence, de la seconde différence, de la troisième différence et de la quatrième différence respectivement pour obtenir la première valeur de puissance du CRS marginal qui est sur le même symbole que le PDSCH dédié, la seconde valeur de puissance du CRS central qui est sur le même symbole que le PDSCH dédié, la première valeur de puissance du CRS marginal qui est sur le même symbole que le PDCCH dédié et la seconde valeur de puissance du CRS central qui est sur le même symbole que le PDCCH dédié;
dans lesquelles la première différence, la première valeur de puissance du CRS marginal qui est sur le même symbole que le PDSCH dédié, la seconde différence, la seconde valeur de puissance du CRS central qui est sur le même symbole que le PDSCH dédié, la troisième différence, la première valeur de puissance du CRS marginal qui est sur le même symbole que le PDCCH dédié, et la quatrième différence et la seconde valeur de puissance du CRS central qui est sur le même symbole que le PDCCH dédié satisfont à ce qui suit: une somme d'une puissance configurée du PDCCH dédié de la zone centrale de la cellule et une puissance configurée du PDSCH dédié de la zone centrale de la cellule et une puissance configurée du CRS central, une puissance configurée du PDCCH dédié de la zone marginale de la cellule et une puissance configurée du PDSCH dédié de la zone marginale de la cellule et une puissance configurée du CRS marginal, et une puissance configurée du CRS commun et une puissance configurée du canal commun de la cellule est, sur un même symbole, non supérieure à une puissance maximale de la cellule.

7. Procédé selon la revendication 4 ou 6, comprenant en outre:
l'information, par l'intermédiaire d'un message de reconfiguration de signalisation, d'un UE dans la cellule d'une différence de puissance entre l'EPRE configurée du PDSCH dédié de la zone marginale de la cellule et l'EPRE configurée du CRS marginal qui est sur le même symbole que le PDSCH dédié et d'une différence de puissance entre l'EPRE configurée du PDSCH dédié de la zone centrale de la cellule et l'EPRE configurée du CRS central qui est sur le même symbole que le PDSCH dédié.

8. Appareil pour configurer un signal de référence spécifique à une cellule (CRS), comprenant:
une unité de division de cellule, configurée pour diviser une cellule en une zone centrale et une zone marginale;
**caractérisé en ce que**, l'appareil comprend en outre:
une unité de division de CRS, configurée pour diviser le CRS en un CRS central, un CRS marginal et un CRS commun, dans lesquels le CRS central est un CRS qui est situé sur une section de ressource de transmission utilisée dans la zone centrale de la cellule et est sur un même symbole qu'un canal dédié de la zone centrale; le CRS marginal est un CRS qui est situé sur une section de ressource de transmission utilisée dans la zone marginale de la cellule et est sur un même symbole qu'un canal dédié de la zone marginale; et le CRS commun est un CRS autre que le CRS central et le CRS marginal, qui est adjacent à un canal commun de liaison descendante dans le domaine fréquentiel et est sur le même symbole que le canal commun de liaison descendante; et
une unité de configuration, configurée pour: configurer une valeur qui est obtenue en ajoutant une première valeur de puissance fixe à une énergie par élément de ressource (EPRE) de référence préétablie, comme une valeur EPRE du CRS marginal; configurer une valeur qui est obtenue en soustrayant une seconde valeur de puissance fixe de l'EPRE de référence préétablie, comme une valeur EPRE du CRS central; et configurer l'EPRE de référence préétablie comme une valeur EPRE du CRS commun.

9. Appareil selon la revendication 8, **caractérisé en ce que**, lorsque la ressource de transmission est une ressource de domaine fréquentiel, l'unité de configuration comprend:
une sous-unité de détermination, configurée pour déterminer une première différence entre une EPRE d'un canal partagé de liaison descendante physique (PDSCH) dédié préétabli de la zone marginale de la cellule et l'EPRE de référence préétablie, et déterminer une seconde différence entre une EPRE d'un PDSCH dédié préétabli de la zone centrale de la cellule et l'EPRE de référence préétablie; et
une sous-unité d'établissement de valeur, configurée pour établir la première différence comme la première valeur de puissance et établir la seconde différence comme la seconde valeur de puissance;
dans lesquelles la première différence, la première valeur de puissance, la seconde différence et la seconde valeur de puissance satisfont à ce qui suit: une somme d'une puissance configurée du PDSCH dédié de la zone centrale de la cellule et une puissance configurée du CRS central, une puissance configurée du PDSCH dédié de la zone marginale de la cellule et une puissance configurée du CRS marginal, et une puissance configurée du CRS commun et une puissance configurée du canal commun de la cellule est, sur un même symbole, non supérieure à une puissance maximale de la cellule.

10. Appareil selon la revendication 8, **caractérisé en ce que**, lorsque la ressource de transmission est une ressource de domaine fréquentiel, l'unité de configuration comprend:
une sous-unité de détermination, configurée pour déterminer une première différence entre une EPRE d'un PDSCH dédié préétabli de la zone marginale de la cellule et l'EPRE de référence préétablie, et déterminer une seconde différence entre une EPRE d'un PDSCH dédié préétabli de la zone centrale de la cellule et l'EPRE de référence préétablie; et
une sous-unité d'établissement de valeur, configurée pour, selon un résultat de simulation de système et de test de réseau, ajuster la première différence pour obtenir la première valeur de puissance et ajuster la seconde différence pour obtenir la seconde valeur de puissance;
dans lesquelles la première différence, la première valeur de puissance, la seconde différence et la seconde valeur de puissance satisfont à ce qui suit: une somme d'une puissance configurée du PDSCH dédié de la zone centrale de la cellule et une puissance configurée du CRS central, une puissance configurée du PDSCH dédié de la zone marginale de la cellule et une puissance configurée du CRS marginal, et une puissance configurée du CRS commun et une puissance configurée du canal commun de la cellule est, sur un même symbole, non supérieure à une puissance maximale de la cellule.

11. Appareil selon la revendication 8, **caractérisé en ce que**, lorsque la ressource de transmission est une ressource de domaine temporel, l'unité de configuration comprend:
une sous-unité de détermination, configurée pour: déterminer une première différence entre une EPRE d'un PDSCH dédié préétabli de la zone marginale de la cellule et l'EPRE de référence préétablie; déterminer une seconde différence entre une EPRE d'un PDSCH dédié préétabli de la zone centrale de la cellule et l'EPRE de référence préétablie; déterminer une troisième différence entre une EPRE d'un canal de commande de liaison descendante physique (PDCCH) dédié préétabli de la zone marginale de la cellule et l'EPRE de référence préétablie; et déterminer une quatrième différence entre une EPRE d'un PDCCH dédié préétabli de la zone centrale de la cellule et l'EPRE de référence préétablie; et
une sous-unité d'établissement de valeur, configurée pour: établir la première différence comme une première valeur de puissance d'un CRS marginal qui est sur le même symbole que le PDSCH dédié; établir la seconde différence comme une seconde valeur de puissance d'un CRS central qui est sur le même symbole que le PDSCH dédié; établir la troisième différence comme une première valeur de puissance d'un CRS marginal qui est sur le même symbole que le PDCCH dédié; et établir la quatrième différence comme une seconde valeur de puissance d'un CRS central qui est sur le même symbole que le PDCCH dédié;
dans lesquelles la première différence, la première valeur de puissance du CRS marginal qui est sur le même symbole que le PDSCH dédié, la seconde différence, la seconde valeur de puissance du CRS central qui est sur le même symbole que le PDSCH dédié, la troisième différence, la première valeur de puissance du CRS marginal qui est sur le même symbole que le PDCCH dédié, et la quatrième différence et la seconde valeur de puissance du CRS central qui est sur le même symbole que le PDCCH dédié satisfont à ce qui suit: une somme d'une puissance configurée du PDCCH dédié de la zone centrale de la cellule et une puissance configurée du PDSCH dédié de la zone centrale de la cellule et une puissance configurée du CRS central, une puissance configurée du PDCCH dédié de la zone marginale de la cellule et une puissance configurée du PDSCH dédié de la zone marginale de la cellule et une puissance configurée du CRS marginal, et une puissance configurée du CRS commun et une puissance configurée du canal commun de la cellule est, sur un même symbole, non supérieure à une puissance maximale de la cellule.

12. Appareil selon la revendication 8, **caractérisé en ce que**, lorsque la ressource de transmission est une ressource de domaine temporel, l'unité de configuration comprend:
une sous-unité de détermination, configurée pour: déterminer une première différence entre une EPRE d'un PDSCH dédié préétabli de la zone marginale de la cellule et l'EPRE de référence préétablie; déterminer une seconde différence entre une EPRE d'un PDSCH dédié préétabli de la zone centrale de la cellule et l'EPRE de référence préétablie; déterminer une troisième différence entre une EPRE d'un PDCCH dédié préétabli de la zone marginale de la cellule et l'EPRE de référence préétablie; et déterminer une quatrième différence entre une EPRE d'un PDCCH dédié préétabli de la zone centrale de la cellule et l'EPRE de référence préétablie; et
une sous-unité d'établissement de valeur, configurée pour: selon un résultat de simulation de système et de test de réseau, ajuster la première différence, la seconde différence, la troisième différence et la quatrième différence respectivement pour obtenir la première valeur de puissance du CRS marginal qui est sur le même symbole que le PDSCH dédié, la seconde valeur de puissance du CRS central qui est sur le même symbole que le PDSCH dédié, la première valeur de puissance du CRS marginal qui est sur le même symbole que le PDCCH dédié et la seconde valeur de puissance du CRS central qui est sur le même symbole que le PDCCH dédié;
dans lesquelles la première différence, la première valeur de puissance du CRS marginal qui est sur le même symbole que le PDSCH dédié, la seconde différence, la seconde valeur de puissance du CRS central qui est sur le même symbole que le PDSCH dédié, la troisième différence, la première valeur de puissance du CRS marginal qui est sur le même symbole que le PDCCH dédié, et la quatrième différence et la seconde valeur de puissance du CRS central qui est sur le même symbole que le PDCCH dédié satisfont à ce qui suit: une somme d'une puissance configurée du PDCCH dédié de la zone centrale de la cellule et une puissance configurée du PDSCH dédié de la zone centrale de la cellule et une puissance configurée du CRS central, une puissance configurée du PDCCH dédié de la zone marginale de la cellule et une puissance configurée du PDSCH dédié de la zone marginale de la cellule et une puissance configurée du CRS marginal, et une puissance configurée du CRS commun et une puissance configurée du canal commun de la cellule est, sur un même symbole, non supérieure à une puissance maximale de la cellule.

13. Appareil selon la revendication 10 ou 12, comprenant en outre:
une unité de transmission de message de reconfiguration de signalisation, configurée pour informer, par l'intermédiaire d'un message de reconfiguration de signalisation, un équipement d'utilisateur (UE) dans la cellule d'une différence de puissance entre l'EPRE configurée du PDSCH dédié de la zone marginale de la cellule et l'EPRE configurée du CRS marginal qui est sur le même symbole que le PDSCH dédié et d'une différence de puissance entre l'EPRE configurée du PDSCH dédié de la zone centrale de la cellule et l'EPRE configurée du CRS central qui est sur le même symbole que le PDSCH dédié.
